# EUROPÄISCHE PATENTSCHRIFT

(11) **EP 0 631 218 B1**
(45) Veröffentlichungstag und Bekanntmachung des Hinweises auf die Patenterteilung: **22.04.1998**
(21) Anmeldenummer: 94108664.7
(22) Anmeldetag: 07.06.1994
(51) Int. Cl.: G05D 23/19, F24D 3/04

(54) **Fernwärmesystem**
District heating system
Système de chauffage à distance

(30) Priorität: 19.06.1993 DE 4320395
(43) Veröffentlichungstag der Anmeldung: 28.12.1994
(73) Patentinhaber: Helmut Bälz GmbH, D-74076 Heilbronn (DE)
(72) Erfinder:
(74) Vertreter: Rüger, Rudolf, Dr.-Ing.

(56) Entgegenhaltungen:
- DE-C- 3 543 674
- FR-A- 2 128 295
- US-A- 4 529 122

## Beschreibung

Zur Übertragung von Heiz- oder Prozeßwärme sind in der Praxis Fernwärmesysteme gebräuchlich, bei denen Dampf als Wärmeübertragungsmedium dient. Derartige, auch als Ferndampfsysteme bezeichnete Fernwärmesysteme weisen einen Dampferzeuger auf, von dem der Dampf über eine Dampfleitung zu den meistens mehreren Dampfwärmeverbrauchern geleitet wird. In diesen gibt der Dampf einen großen Teil seiner Wärme ab, wobei er, wenn auch unter Umständen erst nach mehreren Prozeßstufen, letztendlich doch kondensiert.

Um das enstehende Kondensat zu dem Dampferzeuger rückführen zu können, ist eine die Dampfwärmeverbraucher mit dem Dampferzeuger verbindende Kondensatsammelleitung vorgesehen. Zur Regelung des Abflusses des Kondensats aus den Dampfwärmeverbrauchern sind zwischen dem jeweiligen Dampfwärmeverbraucher und die Kondensatsammelleitung Kondensat-ableiter geschaltet. Ein derartiger Kondensatableiter besteht im wesentlichen aus einem Gefäß, das mit einem ersten Anschluß mit dem Auslaß des Dampfwärmeverbrauchers verbunden ist und das einen zweiten, durch ein Ventil absperrbaren Anschluß aufweist, der zu der Kondensatsammelleitung führt. Zur Steuerung des Ventiles ist im Inneren des Kondensatableiters ein beweglich gelagerter Schwimmer vorgesehen, der mechanisch mit einem entsprechenden, zu dem Ventil gehörigen, Absperrmittel verbunden ist. Dieses Ventil wird von dem Schwimmer geöffnet, sobald in dem Kondensatableiter eine einen festgelegten Maximalwert überschreitende Menge von Kondensat angesammelt ist.

Bei diesen Fernwärmesystemen hängt die Betriebssicherheit und die Effizienz des Systems entscheidend von der Zuverlässigkeit der Kondensatableiter ab. Die beschriebenen, oft an schwer oder gänzlich unzugänglichen Stellen des Fernwärmesystems angeordneten Kondensatableiter weisen mechanisch bewegte Teile auf, die aufgrund thermischer und/oder chemischer Einflüsse festgehen können. Bleibt beispielsweise der Schwimmer des Kondensatableiters in einer Lage hängen, bei der das Ventil geöffnet ist, drückt der Dampf in den betreffenden Kondensatableiter und womöglich in die Kondensatsammelleitung hinein. Dabei sind nicht nur häufig lange Zeit unbemerkt bleibende Energieverluste sondern auch zu übermäßigen mechanischen Beanspruchungen des Systems führende Dampfschläge zu erwarten.

Wenn jedoch der Schwimmer in einer Lage hängen bleibt, in der das Ventil ganz oder fast geschlossen ist, fällt der vorgeschatete Dampfwärmeverbraucher ganz aus oder kommt nicht auf die volle Leistung.

Aus der DE-A 2110513 ist ein Kondensatableiter bekannt, der schwimmergesteuert arbeitet. Der Kondensatableiter weist ein mit einem Eingangsanschluß und einem Ausgangsanschluß versehenes Gehäuse auf, in dem sich anfallendes Kondensat sammeln kann. Der Ausgang des Gehäuses wird über ein Ventil gesteuert. Dieses wird von einem Schwimmer über eine Wippe betätigt und geschlossen, sobald der Kondensatstand in dem Gehäuse einen Minimalpegel unterschreitet. Übersteigt der Kondensatstand diesen Pegel, wird das Ventil geöffnet. Um einen zusätzlichen Reglungseingriff zu ermöglichen, ist an dem Kondensatableiter ein elektrischer Stellantrieb vorgesehen der auf die Wippe wirkt. Der entsprechende Elektromotor des Stellantriebs wird von einer Regeleinrichtung gesteuert, die mehrere Parameter eines Heizungssystems erfaßt, in das der Kondensatableiter eingebaut ist.

Bei Fehlfunktion des Kondensatableiters kann es zum Dampfdurchschlag, d.h. zum Durchdrücken des Dampfes durch den Kondesatableiter kommen.

Dieses der Erfindung zugrunde liegende Problematik führt zu der Aufgabe, ein Fernwärmesystem zu schaffen, das zuverlässig und mit guter Effizienz arbeitet.

Die vorstehend genannte Aufgabe wird durch ein Verfahren zur Überwachung des Fernwärmesystems nach Anspruch 1, ein Fernwärmesystem mit den Merkmalen des Anspruchs 5 und einen Kondensatorableiter mit den Merkmalen des Anspruchs 10 gelöst.

Das Verfahren nach Anspruch 1 zur Überwachung des Fernwärmesystems bietet den Vorteil, daß die zu erwartenden Fehler in dem Fernwärmesystem zuverlässig erkannt werden. Durch den Vergleich des ermittelten Zeitverhältnisses mit einem Maximalwert kann sehr schnell, nämlich schon bei einem ersten Überschreiten dieses Verhältnisses reagiert werden.

Die Anpassung an unterschiedliche, den Kondensatableitern vorgeschaltete Dampfwärmeverbraucher ist auf einfache Weise möglich, wenn dabei der Maximalwert durch den maximalen Dampfverbrauch des vorgeschalteten Dampfwärmeverbrauchers bestimmt ist.

Die Bestimmung des Phasenzustandes des in dem Kondensatableiter befindlichen Wassers anhand des Zustandsdiagrammes für Wasser liefert Information darüber ob Wasser oder Dampf in dem Kondensatableiter steht, ohne daß der Pegelstand gemessen werden müßte. Das Verfahren arbeitet somit unabhängig von einem evtl. vorhandenen, das Ventil steuernden Schwimmer. Deshalb können auch Fehler, die nicht in einem Festgehen des Schimmers, sondern in einer Undichtigkeit des Ventils liegen, zuverlässig erkannt werden. Sollte das Ventil dauernd mehr oder weniger durchlässig sein, stellt die Überwachungseinrichtung fest, daß in dem Kondesatableiter bei den Sensoren ausschließlich Dampf vorhanden ist. Wenn dies ohne Unterbrechung längere Zeit geschieht, kann ein Warnsignal abgegeben oder auch der betreffende Anlagenteil automatisch abgeschaltet werden. Wenn hingegen das Ventil auf Dauer fast oder ganz geschlossen bleibt, so daß der Kondensatableiter ständig mit stärker als gewöhnlich auskühlendem Kondensat geflutet bleibt, stellt die Überwachungseinrichtung dies ebenfalls fest.

Die Feststellung ob Kondensat oder Dampf in dem Kondensatableiter steht, kann auch anhand der gemessenen Leitfähigkeit getroffen werden. Diese wird dazu mit einem Grenzwert verglichen. Der Grenzwert kann aus dem Mittelwert aller gemessenen Leitwerte bestimmt werden. Das hat den Vorteil, daß sich der nun gewissermaßen schwimmende Grenzwert an schleichende Veränderungen des Ionengehaltes des Kondensats anpaßt, die infolge langsamer Korrosion auftreten können. Treten hingegen kurzfristig Erhöhungen des gemessenen Leitwertes auf, liegt der Fehler vor, der von der Überwachungseinrichtung zuverlässig festgestellt wird.

Die Kondensatableiter sind neuralgische Punkte für die Funktionsfähigkeit des Fernwärmesystems. Weil nun in dem Fernwärmesystem eine Überwachungseinrichtung zur Überwachung der Funktionsfähigkeit des Kondensatableiters vorgesehen worden ist, werden Fehler in der Funktionsfähigkeit des Kondensatableiters zuverlässig erkannt. Nicht nur für den Fall, bei dem das Ventil am Ausgang des Kondensatableiters fehlerhafterweise auf Dauer geschlossen bleibt und bei dem dadurch der vorgeschaltete Dampfwärmeverbraucher ohnehin ausfällt, sondern auch bei den sonst meist unerkannt bleibenden Fällen, bei denen nämlich der Kondensatableiter Dampf durchgehen läßt, ist eine Fehlererkennung sichergestellt. Damit wird ein übermäßiger Dampfverbrauch durch Eindringen des Dampfes in die Kondensatsammelleitung verhindert. Darüberhinaus werden auch mechanische Folgeschäden, die ansonsten durch das Eindringen von Dampf in die Kondensatsammelleitung auftreten können, zuverlässig vermieden.

Zusätzlich ist die Möglichkeit geschaffen, daß die Überwachungseinrichtung nicht nur die Funktionsfähigkeit des Kondensableiters sondern auch die von diesem durchgelassene Kondensatmenge überwacht und womöglich registriert. Diese Daten könnnen in einer zentralen Prozeßleit- oder Führungsstelle verarbeitet werden.

Die Anordnung eines eine physikalische Größe des Wassers erfassenden Sensors, nämlich eines den Druck und/oder die Temperatur und/oder die elektrische Leitfähigkeit und/oder die Höhe des Kondensatpegels in dem Innenraum des Kondensatableiters erfassenden Sensors in dem Kondensatableiter ermöglicht die sichere Überwachung aller vorhandenen Kondensatableiter. Beispielsweise kann der Sensor ein Sensor zum Erfassen der in dem Kondensatsammelgefäß vorhandenen Temperatur sein. Ist die gemessene Temperatur bei ansonsten bekanntem und im wesentlichen konstanem Systemdruck auf Dauer zu hoch, liegt ein Fehler vor, den die Überwachungseinrichtung einfach feststellen kann.

Der Kondensatableiter wird vorteilhaft nach dem Anspruch 10 ausgebildet. Zur Bestimmung wenigstens einer physikalischen Größe des in dem Kondensatsammelgefäß sich befindenden Wassers, ist wenigstens ein Sensor vorgesehen. Damit wird die Überwachung des Kondensatableiters ermöglicht. Wenn der Systemdruck einigen Schwankungen unterliegt, ist es vorteilhaft, einen Sensor zum Erfassen des in dem Kondensatsammelgefäß herrschenden Drucks vorzusehen. Ist außerdem ein Temperatursensor vorgesehen, sollten beide Sensoren räumlich eng beieinander angeordnet sein, um beispielsweise bei einem in dem Kondensatsammelgefäß vorhandenen Temperaturgefälle keine zu großen Verfälschungen der Meßwerte zu erhalten.

Der Drucksensor kann an dem Boden des Kondensatsammelgefäßes angeordnet werden. Dabei ist jedoch zu vermeiden, daß der Drucksensor in einem sich in dem Kondensatsammelgefäß womöglich bildenden Sumpf angeordnet wird. Dazu kann der Drucksensor auch oberhalb des zweiten, an die Kondensatsammelleitung angeschlossenen Anschlusses angeordnet sein.

Der Sensor kann auch ein Sensor zum Erfassen des elektrischen Leitwertes des Inhaltes des Kondensatsammelgefäßes sein. Dieser Sensor kann sowohl dazu dienen, um festzustellen ob elektrisch schwach leitendes Kondensat oder elektrisch isolierender Dampf in dem Kondensatsammelgefäß vorhanden ist, als auch dazu, um eine ungewöhnliche Erhöhung der Leitfähigkeit festzustellen, die auf das Eindringen von dissoziierenden Fremdstoffen in das Dampfsystem schließen läßt. Dies hat vor allem bei der Versorgung von chemischen Prozessen mit Prozeßwärme Bedeutung. Gelangen hier nämlich, beispielsweise durch ein Leck, die meist aggressiven chemischen Stoffe in den Dampfkreislauf, bleibt dies gewöhnlich längere Zeit unbemerkt, zumindest wenn es sich um ein kleineres Leck handelt. Erst wenn der Fehler zufällig bemerkt wird, werden die dann meist größeren Schäden festgestellt. Die rechtzeitige Erkennung des Eindringes dieser Fremdstoffe in den Dampfkreislauf kann somit kostspielige Nachfolge schäden vermeiden helfen.

Der Sensor zur Überwachung der Funktionsfähigkeit des Kondensatableiters kann auch ein Ultraschallsensor zum Erfassen des Kondensatpegels in dem Kondensatsammelgefäß sein. Dieser kommt ohne bewegte Teile aus.

Um eine elektrische Überwachung zu ermöglichen, können Sensoren vorgesehen sein, die die jeweilige physikalische Größe in eine elektrische Größe wandeln. Die Verringerung der Fehleranfälligkeit der Sensoren infolge mechanischer Schäden gelingt, wenn der Kondensatableiter und die Sensoren ausschließlich ruhende Teile umfassen.

Eine einfache Bauform des Kondensatableiters weist als Sensor zum Feststellen des Kondensatpegels in dem Kondensatsammelgefäß einen innerhalb des Kondensatsammelgefäßes beweglich gelagerten Schwimmer auf. Dieser steuert einen elektrischen Schalter, der über die Signalleitung an die Überwachungseinrichtung angeschlossen ist. Außerdem steht der Schwimmer mit dem Ventil in Wirkverbindung.

Die Wirkverbindung zwischem dem Schwimmer und dem Ventil kann bei einer ersten, einfachen Bauform derart hergestellt werden, daß der Schwimmer und das Ventil miteinander mechanisch verbunden sind. Das hat den Vorteil, daß das Ventil ohne Zuführung von Fremdenergie öffnet und schließt.

Wenn der Schwimmer und das Ventil derart ausgebildet sind, daß das Ventil geöffnet ist, wenn das in dem Kondensatsammelgefäß anstehende Kondensat einem Maximalpegel überschreitet und daß das Auslaßventil geschlossen ist, wenn das Kondensat einen Minimalpegel unterschreitet, hat das Ventil lediglich zwei Zustände. Es ist entweder ganz offen oder ganz geschlossen. Die Öffnungs- und Schließbewegungen des Ventils lassen sich somit ohne das Erfordernis, analoge Zwischenwerte erfassen zu müssen, auf besonders einfache Weise mit geringem Aufwand erfassen.

Dies kann beispielsweise durch einen elektrischen Schalter erfolgen, der über die Signalleitung an die Überwachungseinrichtung angeschlossen ist. Wenn der elektrische Schalter ein von einem mit dem Schwimmer verbundenen Magneten gesteuerter Schutzrohrschalter ist, kann der Schalter außerhalb des unmittelbaren Dampf- oder Kondensatbereiches ohne direkte mechanische Verbindung mit dem Schwimmer ausgebildet werden.

Zugleich ergibt dies die Möglichkeit, das Ventil als elektrisch ansteuerbares Magnetventil auszuführen, das von dem elektrischen Schalter gesteuert wird. Dann ist keine mechanische Verbindung zwischen dem Schwimmer und dem Ventil erforderlich. Weil der Schwimmer in diesem Fall nicht die für das Öffnen und Schließen des Ventiles erforderliche Kraft aufzubringen braucht, kann er platzsparend klein ausgeführt werden.

Zur Selbststeuerung kann dem Kondensatableiter eine Steuereinrichtung zugeordnet sein, die an den Sensoren angeschlossen ist, die aus den erfaßten und an die Steuereinrichtung übermittelten Werten feststellt, ob an dem oder den Sensoren oder in einem festgelegten Abstand von dem Sensor Dampf oder Wasser vorhanden ist, und die in Abhängigkeit von dem Ergebnis das Ventil öffnet oder schließt.

Die Steuereinrichtung kann die Entscheidung über den Phasenzustand des in dem Kondensatableiter vorhandenen Wassers anhand des Phasenzustandsdiagramms für Wasser treffen, wenn die Steuereinrichtung einen Speicher aufweist, in dem das Phasenzustandsdiagramm in Tabellenform enthalten ist. Es ist somit für digital informationsverarbeitende Mittel verfügbar.

Bei dem Verfahren zum Steuern des Kondensatableiters nach Anspruch 28 nutzt die Steuereinrichtung die ermittelte Information über den Phasenzustand des in dem Kondensatableiter vorhandenen Wassers und steuert entsprechend das Ventil am Ausgang des Kondensatableiters. Der Kondensatableiter kommt so ohne Schwimmer aus.

Die Überwachungs- und die Steuereinrichtung können dabei in einem oder mehreren Geräten realisiert sein. Insbesondere ist es auch möglich, eine Rechneranlage, nämlich beispielsweise die zentrale Prozeßleit- und Steuereinrichtung, zu verwenden, bei der die Überwachungs- und die Steuerfunktion von einem entsprechenden Rechenprogramm übernommen wird. Die Steuereinrichtung ist dabei mit dem Magnetventil jedes Kondensatableiters elektrisch verbunden und zwar so, daß das Magnetventil auf von der Steuereinrichtung abgegebene Steuersignal öffnet bzw. schließt. Die Steuereinrichtung kann jedoch auch für den Kondensatableiter separat vorgesehen sein. Die Steuerung der Kondensatableiter erfolgt dann unabhängig voneinander.

Es kann möglich sein, daß zur Verringerung der pro Zeiteinheit ausgeführten Schaltspiele eine gewisse Schalthysterese gewünscht wird. In diesem Fall liegen die Schaltgrenzen für die Temperatur und den Druck, bei denen die Steuereinrichtung das Magnetventil öffent bzw. schließt, jeweils in einem gewissen, eine Schalthysterese verursachenden Abstand von der Phasengrenzlinie (Dampfdruckkurve) des Zustandsdiagrammes für Wasser. Um zu vermeiden, daß Dampf in die Kondensatsammelleitung eintritt, wird der "dampfseitige" Abstand von der Phasengrenzlinie gering gewählt. Hingegen darf der Abstand der "kondensatseitigen" Schaltgrenze von der Phasengrenze hier etwas größer sein, was zur Folge hat, daß das Kondensat noch etwas abkühlen muß bevor es ausgelassen wird.

In der Zeichnung sind Ausführungsbeispiele der Erfindung dargestellt. Es zeigen:
- Fig. 1: ein Fernwärmesystem in grober Blockdarstellung,
- Fig. 2: einen einzelnen, an eine Dampfleitung sowie an einer Kondensatsammelleitung angeschlossenen Dampfwärmeverbraucher mit einem Kondensatableiter und mit einer Überwachungseinrichtung, in schematischer Darstellung,
- Fig. 3: einen Kondensatableiter nach Figur 2 in ausgeschnittener und leicht schematisierter Darstellung,
- Fig. 4: einen Kondensatableiter ohne mechanisch bewegte Teile mit einer Überwachungs- uns Steuereinrichtung, und
- Fig. 5: das Zustandsdiagramm für Wasser mit zusätzlich eingetragenen Schaltgrenzen.

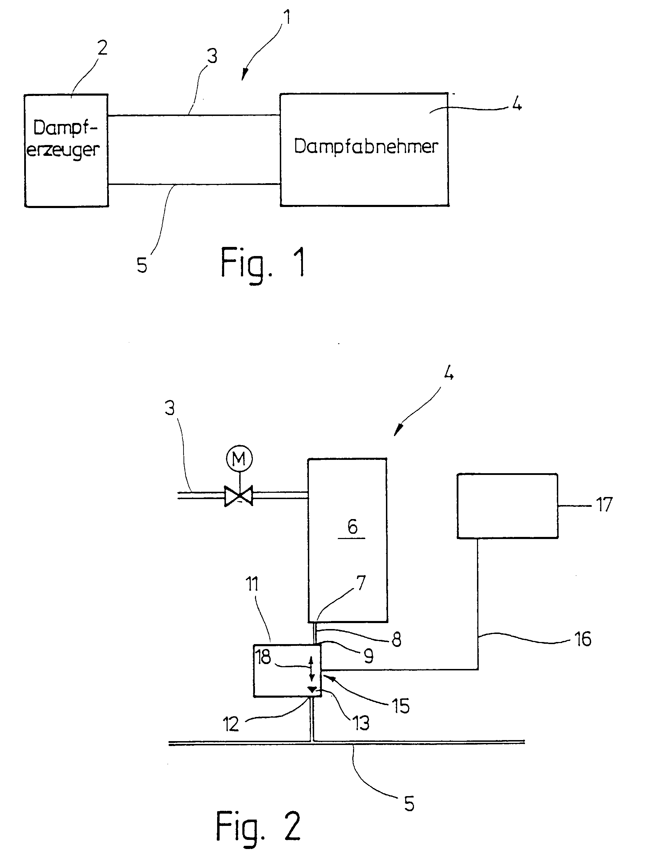

Das in der Fig. 1 grob schematisch dargestellte Fernwärmesystem 1 weist einen Dampferzeuger 2 auf, in dem Dampf mit höherer Temperatur und mit einigem Druck erzeugt wird. Der Dampferzeuger 2 ist über eine Dampfleitung 3 mit einem als Block dargestellten Dampfabnehmer 4 verbunden, in dem die dem Dampf innewohnende Wärme einer Nutzanwendung zugeführt wird. Von dem Dampfabnehmer 4 führt eine Kondensatsammelleitung 5 zur Rückführung des in dem Dampfabnehmer 4 entstehenden Kondensats zu dem Dampferzeuger 2.

In der Fig. 2 ist ein Ausschnitt aus dem Dampfabnehmer 4 als Prinzipschaltbild dargestellt. Der Dampfabnehmer 4 umfaßt ein Netz von Dampfwärmeverbrauchern 6 unterschiedlicher Art, wie Dampf-Autoklaven, Kalander, Dampf-Wasser-Wärmeübertrager, Zylindertrockner oder Pasteuriseure. In Fig. 2 ist stellvertretend für alle Dampfwärmeverbraucher ein als Block dargestellter einzelner Dampfwärmeverbraucher 6 dargestellt. Die Dampfleitung 3 führt zu dem Dampfwärmeverbraucher 6, in dem der von der Dampfleitung 3 herangeführte Dampf entsprechend dem Wärmebedarf des jeweiligen Prozesses kondensiert. Für das entstehende Kondensat ist als Auslaß 7 eine Leitung 8 vorgesehen, die unmittelbar zu einem Zulauf 9 eines Kondensatableiters 11 führt. Der Kondensatableiter 11 weist einen Ablauf 12 auf, der von einem Ventil 13 gesteuert ist. Der Ablauf 12 führt unmittelbar zu der Kondensatsammelleitung 5.

Zur Überwachung der Funktionsfähigkeit des Kondensatableiters 11 ist an diesem eine Sensoranordnung 15 vorgesehen, die über eine elektrische Leitung 16 mit einer Uberwachungseinrichtung 17 verbunden ist. Die Überwachungseinrichtung 17 ist ein Teil einer nicht weiter dargestellten rechnergestützten Prozeßleit- und Steuereinrichtung, die bei größeren Anlagen ohnehin vorhanden ist.

Die Sensoranordnung 15 besteht im einfachsten Falle aus einem nicht dargestellten Schalter, der entsprechend den in Fig. 2 durch einen Pfeil 18 angedeuteten Bewegungen des entsprechenden Schließteils des Ventils 13 gesteuert ist.

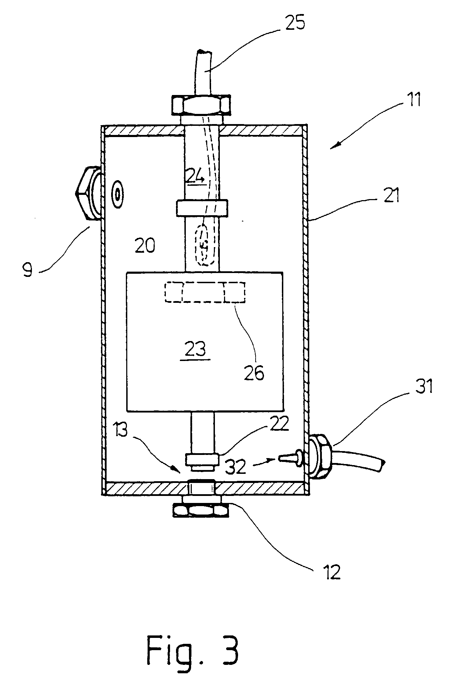

Der Kondensatableiter 11 ist in der Fig. 3 separat dargestellt. Er weist ein allseitig geschlossenes Kondensatsammelgefäß 21 auf, das die Form eines aufrecht stehenden Zylinders hat. An der Wandung des Kondensatsammelgefäßes 21 ist in einem oberen Abschnitt der als Kondensatzufluß dienende Zulauf 9 vorgesehen. In dem Bodenabschnitt sitzt axial zu dem zylindrischen Kondensatsammelgefäß 21 der mit der in Fig. 3 nicht dargestellten Kondensatsammelleitung 5 verbundene Ablauf 12. Axial zu dem Ablauf 12 ist ein bewegliches Schließstück 22 vorgesehen, das mit dem Ablauf 12 das Ventil 13 bildet. Das Schließstück 22 ist mit einem in dem Innenraum des Kondensatsammelgefäßes 21 angeordneten zylindrischen Schwimmer 23 fest verbunden, der gleitend axial verschieblich auf einem koaxial zu dem zylindrischen Kondensatsammelgefäß 21 angeordneten Gleitrohr 24 sitzt. Das Gleitrohr 24 ist seinerseits fest mit dem Kondensatsammelgefäß 21 verbunden.

Im Inneren des Gleitrohrs 24 ist ein zu der Sensoranordnung 15 gehöriger Schutzrohrkontakt 20 angeordnet, dessen Zuleitungen 25 herausgeführt und über die lediglich in Fig. 2 dargestellte Leitung 16 mit der Überwachungseinrichtung 17 verbunden sind. Zur Betätigung des Schutzrohrkontaktes 20 ist im Inneren des Schwimmers 23 ein punktiert angedeuteter ringförmiger Permanentmagnet 26 vorgesehen, der koaxial zu dem Gleitrohr 24 angeordnet ist.

Das insoweit beschriebene Fernwärmesystem arbeitet wie folgt:

Der über die Dampfleitung 3 ankommende Dampf kondensiert unter Wärmeabgabe in dem Dampfwärmeverbraucher 6, wobei das entstehende Kondensat über die Leitung 8 aus dem Dampfwärmeverbraucher 6 heraus in den Kondensatableiter 11 hinein fließt. Das Ventil 13 ist durch das Eigengewicht des Schwimmers 23 sowie des Schließstückes 22 zunächst geschlossen. Damit ist der Schwimmer 23 in seiner in Fig. 3 unteren Position. Die Entfernung zwischen dem ringförmigen Permanentmagneten 26 und dem in dem Gleitrohr 24 angeordneten Schutzrohrkontakt 20 ist maximal und die Kontakte des Schutzrohrkontaktes 20 sind offen.

Solange noch wenig Kondensat in dem Kondensatsammelgefäß 21 steht, bewirkt der auf dem Schwimmer 23 lastende Dampfdruck zusätzlich zu dem Gewicht des Schwimmers 23 das Geschlossenhalten des Ventiles 13.

Sobald in dem Dampfwärmeverbraucher 6 soviel Kondensat entstanden und über die Leitung 8 in den Kondensatableiter 11 abgeflossen ist, daß das in dem Kondensatsammelgefäß 21 stehende Kondensat den Schwimmer 23 zu tragen beginnt, fährt der Schwimmer 23 auf dem Gleitrohr 24 nach oben, wobei der das Schließstück 22 mitnimmt und das Ventil 13 öffnet. Der sich dabei an den Schutzrohrkontakt 20 annähernde Permanentmagnet 26 bewirkt ein Schließen bzw. Umschalten der Kontakte des Schutzrohrkontaktes, was die Überwachungseinrichtung 17 über die Leitung 16 feststellt.

Der in dem Kondensatsammelgefäß 21 lastende Dampfdruck treibt das Kondensat durch das geöffnete Ventil 13 solange hinaus bis das verbleibende Kondensat dem Schwimmer 23 nicht mehr zu tragen vermag, wobei sich dieser wieder nach unten bewegt und das Ventil 13 schließt. Bei dem Absinken des Schwimmers 23 in Fig. 3 nach unten schalten nun auch wieder die Kontakte des Schutzrohrkontaktes 20 zurück.

Dieses sich im Betrieb forwährend wiederholende Arbeitsspiel des Schwimmers 23 mit dem Ventil 13 wird von der Überwachungseinrichtung 17 als mehr oder weniger periodisches Umschalten des Schutzrohrkontaktes 20 beobachtet.

Wenn durch einen Fehler der Schwimmer 23 beispielsweise in seiner oberen Position hängen bleibt, treibt der in das Kondensatsammelgefäß 21 eindringende Dampf zunächst das gesamte Kondensat durch das offene Ventil 13 aus und strömt dann selbst in die Kondensatsammelleitung 5. Weil jedoch dann auch die Kontakte des Schutzrohrkontaktes 20 auf Dauer geschlossen bleiben, stellt die Überwachungseinrichtung 17 alsbald fest, daß ein Fehler vorliegt, nämlich spätestens nachdem die normalerweise für das Entleeren des Kondensatsammelgefäßes 21 erforderliche Zeit und zusätzlich eine willkürlich festgelegte Wartezeit von höchstens einigen Sekunden vergangen ist. Sie gibt dann ein entsprechendes Fehlersignal ab. Das Fehlersignal erscheint als Anzeige auf einem Rechnerbildschirm der Prozeßleit- und Steuereinrichtung. Es kann darüberhinaus mit einem akustischen Warnton verbunden sein.

Auch wenn das Ventil 13 infolge eines Fehlers auf Dauer geschlossen bleibt, stellt die Überwachungseinrichtung 17 die ausbleibenden Bewegungen des Schwimmers 23 fest. Falls der betreffende Kondensatableiter nicht an einen ohnehin stillgesetzten Dampfwärmeverbraucher 6 angeschlossen ist, gibt die Überwachungseinrichtung 17 auch in diesem Fall ein entsprechendes Fehlersignal ab. Somit ist eine einfache Möglichkeit der Plausibilitätskontrolle geschaffen. Im Rahmen dieser Plausibilitätskontrolle kann auch überprüft werden, ob die Arbeitsspiele von an stillgesetzten Dampfwärmeverbrauchern 6 angeschlossenen Kondensatableitern 11 aufgehört haben. Ist das nicht der Fall, liegt ebenfalls ein Fehler vor.

Darüberhinaus wird aus der Frequenz der Arbeitsspiele und dem Verhältnis der Zeit, in der das Ventil 13 offen steht, zu der Zeit, in der das Ventil 13 geschlossen ist, auf die von dem vorgeschalteten Dampfwärmeverbraucher 6 verbrauchte Dampfmenge geschlossen. Stimmt die so ermittelte Dampfmenge nicht mit der vorgesehenen Dampfmenge überein, wird ein Fehlersignal abgegeben.

In einem weiteren Ausführungsbeispiel kann zusätzlich zu dem Schutzrohrkontakt 20 ein in Fig. 3 schematisch angedeuteter Leitfähigkeitssensor 31 vorgesehen sein. Der Leitfähigkeitssensor 31 weist ein oder mehrere in den Innenraum des Kondensatsammelgefäß 21 hineinragende Elektroden 32 auf, die über die Leitung 16 mit der Überwachungseinrichtung 17 verbunden sind. Der Leitfähigkeitssensor 31 dient der Überwachung der Kondensatleitfähigkeit. Dringt nämlich beispielsweise infolge eines Lecks in den dem Kondensatableiter 11 vorgeschalteten Dampfwärmeverbraucher 6 ein aggressiver Stoff, wie eine Base oder eine Säure in den Dampfkreislauf ein, dann erhöht sich die Leitfähigkeit des Kondensats wegen der nunmehr erhöhten Ionenkonzentration merklich. Somit wird das Eindringen dieses aggressiven Stoffes durch die Überwachungseinrichtung anhand der erhöhten Leitfähigkeit des Inhaltes des Kondensatableiters 11 erkannt, noch bevor der aggressive Stoff in größeren Mengen und über längere Zeit auf die Anlage einwirken und diese zerstören oder beschädigen kann.

Die Erkennung der veränderten Leitfähigkeit erfolgt durch einen einfachen Vergleich mit einem Soll- oder Schwellwert. Die Kondensatleitfähigkeit kann sich infolge von Korrosionsprozessen mit der Zeit jedoch verändern. Um einen sich an diese schleichenden Veränderungen der Kondensatleitfähigkeit selbsttätig anpassenden Schwellwert zu erhalten, werden die an allen Kondensatableitern 11 gemessenen Leitfähigkeitswerte gemittelt und der sich ergebende Mittelwert als Schwellwert genommen. Eine plötzliche Abweichung des Leitwertes an einem einzelnen Kondensatableiter von diesem Mittelwert ist ein sicheres Anzeichen für das Eindringen von dissoziierenden Fremdstoffen in das Fernwarmesystem 1.

Schließlich kann anhand der in dem Kondensatableiter 11 gemessenen elektrischen Leitfähigkeit entschieden werden, ob elektrisch gewöhnlich schwach leitendes Kondensat oder im allgemeinen elektrisch isolierender Dampf vorhanden ist.

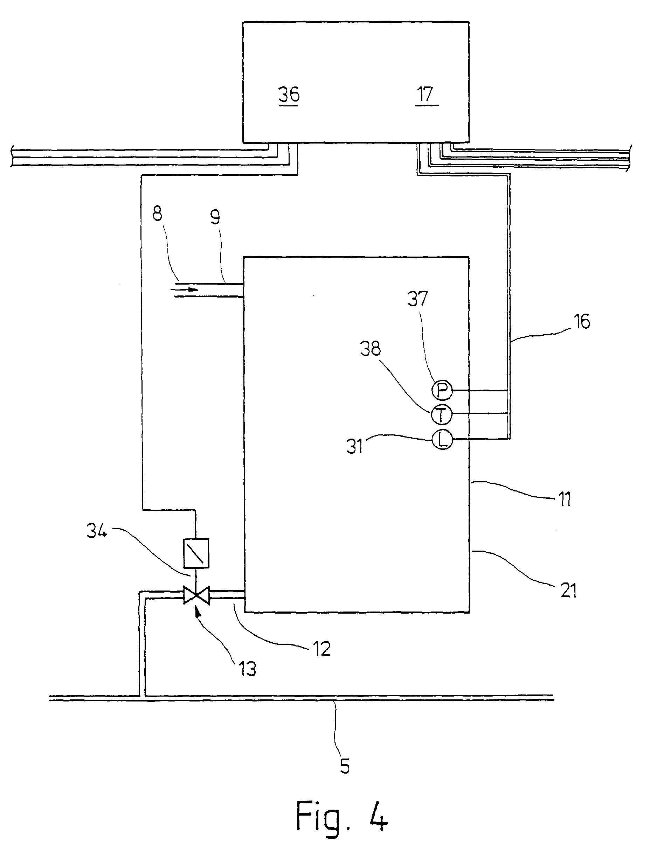

In einem weiteren in Fig. 4 dargestellten Ausführungsbeispiel ist ein Kondensatableiter 11 vorgesehen, der ohne bewegte Teile auskommt. Das Ventil 13 ist als Magnetventil 34 ausgebildet, das von einer Steuereinrichtung 36 elektrisch angesteuert wird. Die Steuereinrichtung 36 ist wie auch die Überwachungseinrichtung 17 Teil der Prozeßleitund Steuereinrichtung.

Auf einen innerhalb des Kondensatsammelgefäßes 21 angeordneten Schwimmer ist völlig verzichtet worden. Dafür sind ein Drucksensor 37 sowie ein Temperatursensor 38 vorgesehen, die den in dem Innenraum des Kondensatsammelgefäßes 21 herrschenden Druck bzw. die in dem Innenraum vorhandene Temperatur in entsprechende elektrische Signale umsetzen, die über die Leitung 16 an die Überwachungseinrichtung 17 weitergeleitet werden. Der Drucksensor 37 ist ein robuster Piezosensor. Der Temperatursensor 38 ist ein temperaturabhängiger elektrischer Widerstand Pt 100. Um den Druck und die Temperatur von einem definierten Bereich zu erfassen, sind diese dicht beieinander angeordnet. In jedem Falle sind der Drucksensor 37 und der Temperatursensor 38 außerhalb eines sich evtl. ausbildenden Sumpfes plaziert.

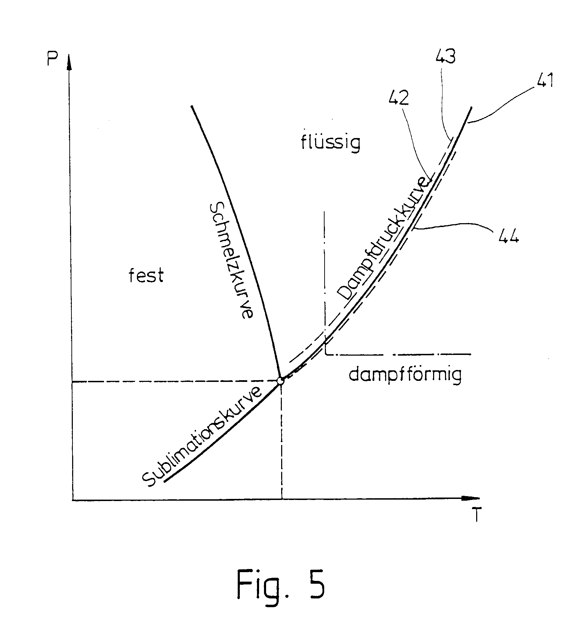

Die Überwachungseinrichtung 17 hat in einem entsprechenden Speicher wenigstens einen Abschnitt der in Fig. 5 dargestellten Dampfdruckkurve 41 abgespeichert. Aus den gemessenen Druck- und Temperaturwerten ermittelt die Überwachungsschaltung 17 fortlaufend den Aggregatzustand des in dem Kondensatsammelgefäß 21 angesammelten Wassers. In Fig. 5 sind die von dem Temperatursensor 38 und von dem Drucksensor 37 gemessenen Temperatur- und Druckwerte als Drucktemperaturpunkt 42 eingetragen.

Wird von dem Drucktemperaturpunkt 42 die in dem "Flüssig-Bereich" liegende gestrichelte Schaltkurve 43 überschritten, veranlaßt die Überwachungseinrichtung 17 die Steuereinrichtung 36, das Magnetventil 34 zu öffnen. Der über die Leitung 8 in das Kondensatsammelgefäß 21 nachdrückende Dampf treibt dann durch das geöffnete Magnetventil 34 das in dem Kondensatsammelgefäß 21 angesammelte Kondensat in die Kondensatsammelleitung 5 aus. Der einströmende Dampf ist wärmer als das ausgetriebene Kondensat, so daß der Temperatursensor 38 ein entsprechend verändertes Signal abgibt. Auch eine durch Strömungsvorgänge verursachte Druckänderung wird von dem Drucksensor 37 sofort an die Überwachungseinrichtung 17 weitergegeben. Die Uberwachungseinrichtung 17 stellt nun eine Verschiebung der in dem Kondensatsammelgefäß 21 herrschenden Druck- und Temperaturwerte fest. In Fig. 5 entspricht dies einer Verschiebung des Drucktemperaturpunktes 42 nach rechts. Sobald dabei die rechts von der Dampfdruckkurve in dem "Dampfförmig-Bereich" liegende gestrichelte Schaltkurve 44 überschritten wird veranlaßt die Überwachungseinrichtung 17 die Steuereinrichtung 36 das Magnetventil 34 zu schließen. Dieser Zustand wird solange aufrechterhalten bis die Überwachungseinrichtung 17 über den Drucksensor 37 und den Temperatursensor 38 eine Verschiebung des Drucktemperaturpunktes 42 erneut in einen Bereich hinein feststellt, der dem flüssigen Aggregatzustand des Wassers entspricht.

Es ist auch möglich die Umschaltpunkte für das Öffnen und Schließen des Magnetventils 34 genau auf die in Fig. 5 dargestellte Dampfdruckkurve 41 zu legen, wobei die ansonsten erzielte Schalthysterese geringer wird oder ganz verschwindet. Durch entsprechende, von der Steuereinrichtung 36 vorgesehene Wartezeiten zwischen den aufeinanderfolgenden Schaltspielen des Magnetventils 34 kann auch ohne Schalthysterese ein stabiles Arbeiten des Kondensatableiters ohne zu häufiges Schalten des Magnetventiles 34 erzielt werden.

Zum Zwecke der direkten Überwachung des Kondensatableiters 11 kann auch der Leitfähigkeitssensor 31 in Verbindung mit der Uberwachungseinrichtung 17 dienen, die anhand des Unterschiedes zwischen der elektrischen Leitfähigkeit des Kondensats und des Dampfes auf die Funktionsfähigkeit des Kondensatableiters 11 schließt. Diese auf die Überwachung des Kondensatpegels hinaus laufende Überwachung kann auch durch einen in dem Kondensatsammelgefäß 21 angeordneten Ultraschallsensor bewerkstelligt werden.

Die Sensoranordnung 15 kann in Verbindung mit der Uberwachungseinrichtung 17 auch lediglich zum Überwachen des ansonsten selbsttätig arbeitenden, mit einem Schwimmer 23 versehenen Kondensatableiters 11 dienen. Es werden dann nicht die Arbeitsspiele des Schwimmers 23 überwacht, wie es bei dem mit einem Schutzrohrkontakt 20 versehenen Kondensatableiter 11 der Fall ist, sondern es wird direkt der Aggregatzustand des in dem Kondensatsammelgefäß 21 befindlichen Wassers ermittelt. Dies ist sowohl durch die Auswertung der Druck- und Temperaturwerte anhand der Dampfdruckkurve nach Fig. 5, als durch die Auswertung der in dem Kondensatsammelgefäß gemessenen elektrischen Leitfähigkeit, als auch durch die Auswertung des von dem Ultraschallsensor abgegebenen Ultraschallsignals möglich.

In einer weiteren Ausführungsform ist der Kondensatableiter in den Dampfwärmeverbraucher 6 integriert. Der Drucksensor und der Temperatursensor sind in einem Bereich angeordnet, in dem sich das Kondensat sammelt aber eine bestimmte Menge nicht überschreiten soll. An dem für das Kondensat vorgesehenen Ausgangsanschluß ist das Magnetventil vorgesehen. Im übrigen funktioniert dieser Dampfwärmeverbraucher mit integriertem Kondensatableiter, wie das vorstehend beschriebene Ausführungsbeispiel.

## Patentansprüche

1. Verfahren zur Überwachung eines Fernwärmesystems (1)
mit einem Dampferzeuger (2)
mit wenigstens einer von dem Dampferzeuger (2) wegführenden Dampfleitung (3)
mit wenigstens einem an die Dampfleitung (3) angeschlossenen, den Dampf kondensierenden Dampfwärmeverbraucher (6), desses Auslaß (7) an die Kondensatsammelleitung (5) angeschlossen ist,
mit wenigstens einem Kondensatableiter (11), der in einer Verbindungsleitung liegt, über die der Auslaß (7) des Dampfwärmeverbrauchers (6) mit der Kondensatsammelleitung (5) verbunden ist, und der wenigstens zwei Betriebszustände aufweist, wobei er in einem Betriebszustand abgesperrt und in dem anderen Betriebszustand zumindest teilweise geöffnet ist,
wobei an dem wenigstens einen Kondesatableiter (11) eine Sensoranordnung (15) zur Überwachung des Betriebszustandes des Kondensatableiters (11) und/oder des Phasenzustandes des Wassers in dem Kondensatableiter vorgesehen ist, die an ihrem Ausgang Signale abgibt, und
mit einer Überwachungseinrichtung (17), der über eine Signalleitung (16) die Signale von der Sensoranordnung (15) des wenigstens einen Kondensatableiters (11) zugeführt sind,
dadurch gekennzeichnet,
daß die Überwachungseinrichtung (17) ein Fehlersignal abgibt, wenn sie anhand der von der Sensoranordnung gelieferten Signale feststellt, daß das Verhältnis der Zeit, in der der Kondensatableiter zumindest teilweise offen ist bzw. offen sein soll, zu der Zeit, in der der Kondensatableiter geschlossen ist bzw. geschlossen sein soll, einen Maximalwert über schreitet.

2. Verfahren nach Anspruch 1, dadurch gekennzeichnet, daß der Maximalwert durch den maximalen Dampfverbrauch des vorgeschalteten Dampfwärmeverbrauchers (6) bestimmt ist.

3. Verfahren nach Anspruch 1, dadurch gekennzeichnet, daß die Überwachungseinrichtung (17) aus den von der Sensoranordnung (15) angegebenen, unter Druck und die Temperatur kennzeichnenden Signalen anhand des Phasenzustandsdiagrammes (41) für Wasser ermittelt, ob in dem Kondensatableiter Wasser in flüssiger oder dampfförmiger Form vorhanden ist.

4. Verfahren nach Anspruch 1, dadurch gekennzeichnet, daß die Überwachungseinrichtung (17) ein Fehlersignal abgibt, wenn sich anhand der abgegebenen Signale ergibt, daß die in dem Kondensatableiter (11) gemessene Leitfähigkeit auf Dauer einen Grenzwert wesentlich überschreitet.

5. Verfahren nach Anspruch 4, dadurch gekennzeichnet, daß als Grenzwert ein sich als Mittelwert aus den an allen Kondensatableitern (11) gemessenen Leitfähigkeitswerten ergibt.

6. Fernwärmesystem (1)
mit einem Dampferzeuger (2)
mit wenigstens einer von dem Dampferzeuger (2) wegführenden Dampfleitung (3)
mit wenigstens einem an die Dampfleitung (3) angeschlossenen, den Dampf kondensierenden Dampfwärmeverbraucher (6), dessen Auslaß (7) an die Kondensatsammelleitung (5) angeschlossen ist,
mit wenigstens einem Kondensatableiter (11), der in einer Verbindungsleitung liegt, über die der Auslaß (7) des Dampfwärmeverbrauchers (6) mit der Kondensatsammelleitung (5) verbunden ist, und der wenigstens zwei Betriebszustände aufweist, wobei er in einem Betriebszustand abgesperrt und in dem anderen Betriebszustand zumindest teilweise geöffnet ist,
dadurch gekennzeichnet,
daß an dem wenigstens einen Kondesatableiter (11) eine elektronische Sensoranordnung (15) zur Überwachung des Betriebszustandes des Kondensatableiters (11) und/oder des Phasenzustandes des Wassers in dem Kondensatableiter vorgesehen ist, die an ihrem Ausgang Signale abgibt, und
mit einer Überwachungseinrichtung (17), der über eine Signalleitung (16) die elektrischen Signale von der Sensoranordnung (15) des wenigstens einen Kondensatableiters (11) zugeführt sind.

7. Fernwärmesystem nach Anspruch 6, dadurch gekennzeichnet, daß die Überwachungseinrichtung (17) von einer zentralen Prozeßleit- und Überwachungseinrichtung gebildet ist.

8. Fernwärmesystem nach Anspruch 7, dadurch gekennzeichnet, daß die Sensoranordnung (15) zum Messen des Drucks und/oder der Temperatur und/oder der elektrischen Leitfähigkeit und/oder der Höhe des Kondensatpegels in den Innenraum des Kondensatableiters (11) eingerichtet ist.

9. Fernwärmesystem nach Anspruch 8, dadurch gekennzeichnet, daß alle Kondensatableiter (11) an die Überwachungseinrichtung (17) angeschlossen sind.

10. Kondensatableiter für ein Fernwärmesystem nach Anspruch 6,
mit einem einen Zulauf (9) sowie einen Ablauf (12) aufweisenden Kondensatsammelgefäß (21),
mit einem in dem Strömungsweg des Ablaufes (12) sich befindenden steuerbaren Ventil (13), und
mit wenigstens einer wenigstens eine physikalische Größe des in dem Kondensatsammelgefäß (21) sich befindenden Wassers erfassenden Sensoreinrichtung (31, 37, 38),
dadurch gekennzeichnet, daß die Sensoreinrichtung einen Sensor (31, 37, 38) aufweist der die jeweilige physikalische Größe in eine elektrische Größe wandelt.

11. Kondensatableiter nach Anspruch 10, dadurch gekennzeichnet, daß die Sensoreinrichtung einen Sensor (38) zum Erfassen der in dem Kondensatsammelgefäß (21) herrschenden Temperatur aufweist.

12. Kondensatableiter nach Anspruch 10, dadurch gekennzeichnet, daß die Sensoreinrichtung einen Sensor (38) zum Erfassen des in dem Kondensatsammelgefäß (21) herrschenden Drucks aufweist.

13. Kondensatableiter nach Anspruch 11 und 12, dadurch gekennzeichnet, daß der Temperatursensor (38) und der Drucksensor (37) räumlich eng beieinander angeordnet sind.

14. Kondensatableiter nach Anspruch 10, dadurch gekennzeichnet, daß der Sensor ein Sensor (31) zum Erfassen des elektrischen Leitwertes des Inhaltes des Kondensatsammelgefäßes (21) ist.

15. Kondensatableiter nach Anspruch 10, dadurch gekennzeichnet, daß der Sensor ein Sensor (20, 23) zum Erfassen des Kondensatpegels in dem Kondensatsammelgefäß (21) ist.

16. Kondensatableiter nach Anspruch 15, dadurch gekennzeichnet, daß zur Bestimmung des Kondensatpegels in dem Kondensatsammelgefäß (21) ein Ultraschallsensor vorgesehen ist.

17. Kondensatableiter nach Anspruch 10, dadurch gekennzeichnet, daß das Ventil (13) ein elektrisch gesteuertes Ventil (34) ist.

18. Kondensatableiter nach einem der vorhergehenden Ansprüche, dadurch gekennzeichnet, daß die Sensoren (31, 37, 38) ausschließlich unbewegliche Teile umfassen.

19. Kondensatableiter nach Anspruch 15, dadurch gekennzeichnet, daß der Sensor zum Feststellen des Kondensatpegels in dem Kondensatsammelgefäß (21) einen innerhalb des Kondensatsammelgefäßes (21) beweglich gelagerten Schwimmer (23) umfaßt.

20. Kondensatableiter nach Anspruch 19, dadurch gekennzeichnet, daß der Sensor zum Feststellen des Kondensatpegels einen von dem Schwimmer (23) gesteuerten elektrischen Schalter (20) aufweist, der über die Signalleitung (16) an eine Überwachungseinrichtung (17) angeschlossen ist.

21. Kondensatableiter nach Anspruch 20, dadurch gekennzeichnet, daß der Schwimmer (23) mit dem Ventil (13) in mechanischer und/oder elektrischer Wirkverbindung steht.

22. Kondensatableiter nach Anspruch 21, dadurch gekennzeichnet, daß der Schwimmer (23) und das Ventil (13) derart ausgebildet sind, daß das Ventil (13) geöffnet ist, wenn das in dem Kondensatsammelgefäß (21) anstehende Kondensat einen Maximalpegel überschreitet und daß das Ventil (13) geschlossen ist, wenn das Kondensat einen Minimalpegel unterschreitet.

23. Kondensatableiter nach Anspruch 20, dadurch gekennzeichnet, daß der elektrische Schalter (20) ein Schutzrohrschalter (20) ist, der von einem mit dem Schwimmer (23) verbundenen Permanetmagnet (26) gesteuert ist.

24. Kondensatableiter nach Anspruch 17 und 21, dadurch gekennzeichnet, daß das elektrisch betätigte Magnetventil (34) von dem elektrischen Schalter gesteuert ist.

25. Kondensatableiter nach Anspruch 10, dadurch gekennzeichnet, daß ihm eine Steuereinrichtung (36) zugeordnet ist, die an den oder die Sensoren (31, 37, 38) angeschlossen ist, die aus den erfassten und an die Steuereinrichtung übermittelten Werten feststellt, ob an dem oder den Sensoren (31, 37, 38) oder in einem festgelegten Abstand von dem Sensor Dampf oder Wasser vorhanden ist, und die in Abhängigkeit von dem Ergebnis das Magnetventil (34) öffnet oder schließt.

26. Kondensatableiter nach Anspruch 25, dadurch gekennzeichnet, daß die Steuereinrichtung (36) einen Speicher aufweist, in dem in Tabellenform ein Phasenzustandsdiagramm für Wasser enthalten ist.

27. Kondensatableiter nach Anspruch 26, dadurch gekennzeichnet, daß von der Steuereinrichtung (36) Schaltgrenzen für die Temperatur und den Druck, bei denen die Steuereinrichtung (36) das Magnetventil (34) öffnet bzw. schließt, jeweils in einem eine Schalthysterese verursachenden Abstand von der auch als Dampfdruckkurve (41) bezeichneten Phasengrenzlinie (41) des Zustandsdiagrammes für Wasser festgelegt sind.

28. Kondensatableiter nach Anspruch 27, dadurch gekennzeichnet, daß die in dem Bereich der Dampfphase liegende Schaltgrenze (44) bezüglich Temperatur und Druck nahe bei der Phasengrenzlinie (41) liegt, wohingegen der Abstand der in der Flüssigphase liegenden Schaltgrenze (42) von der Phasengrenzlinie (41) größer ist.

## Claims

1. Process for monitoring a distant heating system (1) with a steam generator (2),
with at least one steam pipe (3) leading away from the steam generator (2),
with at least one steam heat consumer (6) connected to the steam pipe (3), which condenses the steam and the outlet (7) of which is connected to the condensate collection pipe (5),
with at least one steam trap (11), which lies in a connection pipe, via which the outlet (7) of the steam heat consumer (6) is connected to the condensate collection pipe (5), and said steam trap has at least two operating modes, whereby it is blocked in one operating mode and is at least partially open in the other operating mode,
whereby on the at least one steam trap (11), a sensor arrangement (15) is provided for monitoring the operating mode of the steam trap (11) and/or the phase state of the water in the steam trap, said sensor arrangement emitting signals at its output, and
with a monitoring arrangement (17), to which the signals from the sensor arrangement (15) of the at least one steam trap (11) are supplied via a signal line (16),
characterised in that
the monitoring arrangement (17) emits a fault signal when on the basis of the signals delivered by the sensor arrangement it establishes that the relation of the time in which the steam trap is at least partially open or should be open to the time in which the steam trap is closed or should be closed exceeds a maximum value.

2. Process according to Claim 1, characterised in that the maximum value is determined by the maximum steam consumption of the steam heat consumer (6) connected upstream.

3. Process according to Claim 1, characterised in that from the signals given by the sensor arrangement (15), under pressure and identifying the temperature, the monitoring arrangement (17) determines on the basis of the phase stage diagram (41) for water whether water is present in the steam trap in liquid or in vapour form.

4. Process according to Claim 1, characterised in that the monitoring arrangement (17) emits a fault signal if it results on the basis of emitted signals that the conductivity measured in the steam trap (11) substantially exceeds a limit value for a long period.

5. Process according to Claim 4, characterised in that a limit value in the form of a mean value results from the conductivity values measured at all the steam traps (11).

6. Distant heating system (1)
with a steam generator (2),
with at least one steam pipe (3) leading away from the steam generator (2),
with at least one steam heat consumer (6) connected to the steam pipe (3), which condenses the steam and the outlet (7) of which is connected to the condensate collection pipe (5),
with at least one steam trap (11), which lies in a connection pipe, via which the outlet (7) of the steam heat consumer (6) is connected to the condensate collection pipe (5), and said steam trap has at least two operating modes, whereby it is blocked in one operating mode and is at least partially open in the other operating mode,
characterised in that
on the at least one steam trap (11), an electronic sensor arrangement (15) is provided for monitoring the operating mode of the steam trap (11) and/or the phase state of the water in the steam trap, said sensor arrangement emitting signals at its output, and
with a monitoring arrangement (17), to which the electrical signals from the sensor arrangement (15) of the at least one steam trap (11) are supplied via a signal line (16).

7. Distant heating system according to Claim 6, characterised in that the monitoring arrangement (17) is formed by a central process control and monitoring arrangement.

8. Distant heating system according to Claim 7, characterised in that the sensor arrangement (15) is equipped for measuring the pressure and/or the temperature and/or the electrical conductivity and/or the height of the condensate level in the interior of the steam trap (11).

9. Distant heating system according to Claim 8, characterised in that all steam traps (11) are connected to the monitoring arrangement (17).

10. Steam trap for a distant heating system according to Claim 6,
with a condensate collection vessel (21) having an inlet (9) and an outlet (12),
with a controllable valve (13) located in the flow path of the outlet (12), and
with at least one sensor arrangement (31, 37, 38) detecting at least one physical magnitude of the water located in the condensate collection vessel (21),
characterised in that the sensor arrangement has a sensor (31, 37, 38) which converts the respective physical magnitude into an electrical magnitude.

11. Steam trap according to Claim 10, characterised in that the sensor arrangement has a sensor (38) for detecting the temperature prevailing in the condensate collection vessel (21).

12. Steam trap according to Claim 10, characterised in that the sensor arrangement has a sensor (38) for detecting the pressure prevailing in the condensate collection vessel (21).

13. Steam trap according to Claim 11 and 12, characterised in that the temperature sensor (38) and the pressure sensor (37) are arranged spatially close to one another.

14. Steam trap according to Claim 10, characterised in that the sensor is a sensor (31) for detecting the electric conductance of the contents of the condensate collection vessel (21).

15. Steam trap according to Claim 10, characterised in that the sensor is a sensor (20, 23) for detecting the condensate level in the condensate collection vessel (21).

16. Steam trap according to Claim 15, characterised in that an ultrasonic sensor is provided for determining the condensate level in the condensate collection vessel (21).

17. Steam trap according to Claim 10, characterised in that the valve (13) is an electrically controlled valve (34).

18. Steam trap according to one of the preceding claims, characterised in that the sensors (31, 37, 38) exclusively comprise immovable parts.

19. Steam trap according to Claim 15, characterised in that the sensor for determining the condensate level in the condensate collection vessel (21) comprises a float (23) movably mounted inside the condensate collection vessel (21).

20. Steam trap according to Claim 19, characterised in that the sensor for determining the condensate level has an electric switch (20) controlled by the float (23), said switch being connected via the signal line (16) to a monitoring arrangement (17).

21. Steam trap according to Claim 20, characterised in that the float (23) is actively connected mechanically and/or electrically to the valve (13).

22. Steam trap according to Claim 21, characterised in that the float (23) and the valve (13) are constructed so that the valve (13) is open when the condensate present in the condensate collection vessel (21) exceeds a maximum level, and that the valve (13) is closed when the condensate falls below a minimum level.

23. Steam trap according to Claim 20, characterised in that the electric switch (20) is a reed switch (20), which is controlled by a permanent magnet (26) connected to the float (23).

24. Steam trap according to Claim 17 and 21, characterised in that the electrically operated solenoid valve (34) is controlled by the electric switch.

25. Steam trap according to Claim 10, characterised in that a control arrangement (36) is allocated to it which is connected to the sensor or sensors (31, 37, 38), which determines from the detected values transmitted to the control arrangement whether steam or water is present at the sensor or sensors (31, 37, 38) or at a fixed distance from the sensor, and which opens or closes the solenoid valve (34) in dependence upon the result.

26. Steam trap according to Claim 25, characterised in that the control arrangement (36) has a storage means, in which a phase state diagram for water is contained in table form.

27. Steam trap according to Claim 26, characterised in that switching limits for the temperature and the pressure, at which the control arrangement (36) opens or closes the solenoid valve (34), are respectively fixed by the control arrangement (36) at a distance causing a switching hysteresis from the phase limit line (41) of the state diagram for water also referred to as a steam pressure curve (41).

28. Steam trap according to Claim 27, characterised in that the switching limit (44) relating to temperature and pressure located in the range of the steam phase lies close to the phase limit line (41), while the distance of the switching limit (42) located in the liquid phase from the phase limit line (41) is greater.

## Revendications

1. Procédé pour la surveillance d'un système de chauffage à distance (1),
avec un générateur de vapeur (2),
avec au moins une conduite de vapeur (3) partant du générateur de vapeur (2),
avec au moins un utilisateur de vapeur (6) connecté à la conduite de vapeur (3), qui condense la vapeur et dont la sortie (7) est connectée au collecteur de condensats (5),
avec au moins un purgeur de condensats (11) qui est inséré dans une conduite de liaison par l'intermédiaire de laquelle la sortie (7) de l'utilisateur de vapeur (6) est connectée au collecteur de condensats (5) et qui présente au moins deux états de fonctionnement, le purgeur de condensats étant fermé dans un état de fonctionnement et au moins partiellement ouvert dans l'autre état de fonctionnement,
un système de capteurs (15) pour la surveillance de l'état de fonctionnement du purgeur de condensats (11) et/ou de l'état de phase de l'eau dans le purgeur de condensats, qui délivre des signaux à sa sortie, étant prévu sur le purgeur de condensats au nombre d'au moins un et
avec un dispositif de surveillance (17) auquel les signaux du système de capteurs (15) du purgeur de condensats (11) sont transmis par l'intermédiaire d'une ligne de signal (16)
caractérisé
par le fait que le dispositif de surveillance (17) délivre un signal d'erreur lorsqu'il constate sur la base des signaux fournis par le système de capteurs que le rapport du laps de temps pendant lequel le purgeur de condensats est ou doit être au moins partiellement ouvert au laps de temps pendant lequel le purgeur de condensats est ou doit être fermé dépasse une valeur maximale.

2. Procédé selon la revendication 1, caractérisé par le fait que la valeur maximale est déterminée par la consommation maximale de vapeur de l'utilisateur de vapeur (6) placé en amont.

3. Procédé selon la revendication 1, caractérisé par le fait que le dispositif de surveillance (17) détermine à partir des signaux caractérisant la pression et la température délivrés par le système de capteurs (15) à l'aide du diagramme de phases (41) pour l'eau, si de l'eau est présente dans le purgeur de condensats sous forme de liquide ou sous forme de vapeur.

4. Procédé selon la revendication 1, caractérisé par le fait que le dispositif de surveillance (17) délivre un signal d'erreur lorsqu'il s'avère, sur la base des signaux délivrés, que la conductibilité mesurée dans le purgeur de condensats (11) dépasse de manière sensible et durablement une valeur seuil.

5. Procédé selon la revendication 4, caractérisé par le fait que l'on prend pour valeur seuil une valeur moyenne des conductibilités mesurées au niveau de tous les purgeurs de condensats (11).

6. Système de chauffage à distance
avec un générateur de vapeur (2),
avec au moins une conduite de vapeur (3) partant du générateur de vapeur (2),
avec au moins un utilisateur de vapeur (6) connecté à la conduite de vapeur (3), qui condense la vapeur et dont la sortie (7) est connectée au collecteur de condensats (5),
avec au moins un purgeur de condensats (11) qui est inséré dans une conduite de liaison par l'intermédiaire de laquelle la sortie (7) de l'utilisateur de vapeur (6) est connectée au collecteur de condensats (5) et qui présente au moins deux états de fonctionnement, le purgeur de condensats étant fermé dans un état de fonctionnement et au moins partiellement ouvert dans l'autre état de fonctionnement,
caractérisé
par le fait qu'il est prévu sur le purgeur de condensats (11) au nombre d'au moins un un système de capteurs (15) électronique pour la surveillance de l'état de fonctionnement du purgeur de condensats (11) et/ou de l'état de phase de l'eau dans le purgeur de condensats, lequel système de capteurs délivre des signaux à sa sortie et
un dispositif de surveillance (17) auquel sont envoyés les signaux électriques du système de capteurs (15) du purgeur de condensats (11) au nombre d'au moins un.

7. Système de chauffage à distance selon la revendication 6, caractérisé par le fait que le dispositif de surveillance (17) est formé d'un dispositif central de contrôle de processus et de surveillance.

8. Système de chauffage à distance selon la revendication 7, caractérisé par le fait que le système de capteurs (15) est agencé pour la mesure de la pression et/ou de la température et/ou de conductibilité électrique et/ou du niveau de condensats dans la chambre intérieure du purgeur de condensats (11).

9. Système de chauffage à distance selon la revendication 8, caractérisé par le fait que tous les purgeurs de condensats (11) sont connectés au dispositif de surveillance (17).

10. Purgeur de condensats pour un système de chauffage à distance selon la revendication 6,
avec un récipient de collecte de condensats (21) pourvu d'une entrée (9) et d'une sortie (12),
avec une vanne commandée (13) qui est disposée sur le trajet d'écoulement de la sortie (12) et
avec au moins un système de capteurs (31, 37, 38) qui mesure au moins une grandeur physique de l'eau présente dans le récipient de collecte de condensats (21),
caractérisé
par le fait que le système de capteurs comporte un capteur (31, 37, 38) qui transforme la grandeur physique concernée en une grandeur électrique.

11. Purgeur de condensats selon la revendication 10, caractérisé par le fait que le système de capteurs comporte un capteur (38) pour mesurer la température qui règne à l'intérieur du récipient de collecte de condensats (21).

12. Purgeur de condensats selon la revendication 10, caractérisé par le fait que le système de capteurs comporte un capteur (38) pour mesurer la pression qui règne à l'intérieur du récipient de collecte de condensats (21).

13. Purgeur de condensats selon les revendications 11 et 12, caractérisé par le fait que le capteur de température (38) et le capteur de pression (37) sont disposés très près l'un de l'autre dans l'espace.

14. Purgeur de condensats selon la revendication 10, caractérisé par le fait que le capteur est un capteur (31) pour déterminer la conductibilité électrique du contenu du récipient de collecte de condensats (21).

15. Purgeur de condensats selon la revendication 10, caractérisé par le fait que le capteur est un capteur (20, 23) pour déterminer le niveau des condensats à l'intérieur du récipient de collecte de condensats (21).

16. Purgeur de condensats selon la revendication 15, caractérisé par le fait qu'il est prévu un capteur à ultrasons pour déterminer le niveau de condensats dans le récipient de collecte de condensats (21).

17. Purgeur de condensats selon la revendication 10, caractérisé par le fait que la vanne (13) est une vanne (34) commandée électriquement.

18. Purgeur de condensats selon une des revendications précédentes, caractérisé par le fait que les capteurs (31, 37, 38) comportent exclusivement des pièces fixes.

19. Purgeur de condensats selon la revendication 15, caractérisé par le fait que le capteur pour la détermination du niveau de condensats dans le récipient de collecte de condensats (21) comprend un flotteur (23) qui est monté mobile à l'intérieur du récipient de collecte de condensats (21).

20. Purgeur de condensats selon la revendication 19, caractérisé par le fait que le capteur pour la détermination du niveau de condensats comporte un commutateur (20) électrique commandé par le flotteur (23) qui est connecté à un dispositif de surveillance (17) par l'intermédiaire de la ligne de signal (16).

21. Purgeur de condensats selon la revendication 20, caractérisé par le fait que le flotteur (23) est lié mécaniquement et/ou électriquement à la vanne (13).

22. Purgeur de condensats selon la revendication 21, caractérisé par le fait que le flotteur (23) et la vanne (13) sont agencés de telle sorte que la vanne (13) soit ouverte lorsque le condensat présent dans le récipient de collecte de condensats (21) dépasse un niveau maximum et que la vanne (13) soit fermée lorsque le niveau de condensat est inférieur à un niveau minimum.

23. Purgeur de condensats selon la revendication 20, caractérisé par le fait que le commutateur électrique (20) est un commutateur à tube protecteur (20) qui est commandé par un aimant permanent (26) lié au flotteur (23).

24. Purgeur de condensats selon les revendications 17 et 21, caractérisé par le fait que l'électrovanne (34) actionnée électriquement est commandée par le commutateur électrique.

25. Purgeur de condensats selon la revendication 10, caractérisé par le fait qu'un dispositif de commande (36) lui est associé, lequel dispositif de commande est connecté au ou aux capteur(s) (31, 37) 38), détermine à partir des valeurs mesurées et transmises au dispositif de commande si de l'eau ou de la vapeur est présente au niveau du ou des capteur(s) (31, 37, 38) ou à une distance déterminée de celui-ci et, en fonction du résultat, ouvre ou ferme l'électrovanne (34).

26. Purgeur de condensats selon la revendication 25, caractérisé par le fait que le dispositif de commande (36) comporte une mémoire dans laquelle un diagramme de phases pour l'eau est mémorisé sous forme de table.

27. Purgeur de condensats selon la revendication 26, caractérisé par le fait que le dispositif de commande (36) fixe des seuils de commutation pour la température et la pression, pour lesquels le dispositif de commande (36) ouvre ou ferme l'électrovanne (34), avec un écart produisant une hystérésis de commutation par rapport à la limite de phase (41) également appelée courbe de tension de vapeur (41) du diagramme d'état.

28. Purgeur de condensats selon la revendication 27, caractérisé par le fait que le seuil de commutation (44) situé dans le voisinage de la phase vapeur est proche de la limite de phases (41) du point de vue de la température et de la pression, tandis que la distance du seuil de commutation (42) situé dans la phase liquide par rapport à la limite de phases est plus importante.
